# EUROPÄISCHE PATENTSCHRIFT

(11) **EP 0 619 355 B1**
(45) Veröffentlichungstag und Bekanntmachung des Hinweises auf die Patenterteilung: **01.09.1999**
(21) Anmeldenummer: 94101096.9
(22) Anmeldetag: 26.01.1994
(51) Int. Cl.: C09K 3/10, C08F 283/00

(54) **Dichtstoffe**
Sealing materials
Masses d'étancheité

(30) Priorität: 06.04.1993 DE 4311185
(43) Veröffentlichungstag der Anmeldung: 12.10.1994
(73) Patentinhaber: Morton International, Inc., Chicago, Illinois 60606-1596 (US)
(72) Erfinder: Schmidt, Gerald, Dr., D-67547 Worms (DE); Jung, Rainer, D-68775 Ketsch (DE)
(74) Vertreter: Weber, Dieter, Dr.

(56) Entgegenhaltungen:
- EP-A- 0 502 611
- DE-A- 1 945 457
- DE-A- 2 240 891
- DATABASE WPI Week 7844, Derwent Publications Ltd., London, GB; AN 78-79590A & SU-A-584 027 (KAZAN KIROV CHEM TECHN) 9. Dezember 1977
- DATABASE WPI Week 7749, Derwent Publications Ltd., London, GB; AN 77-87294Y & JP-A-5 212 960 (YOKOHAMA RUBBER KK) 27. Oktober 1977
- DATABASE WPI Week 9043, Derwent Publications Ltd., London, GB; AN 90-326175 & JP-A-2 235 979 (YOKOHAMA RUBBER KK) 18. September 1990
- DATABASE WPI Week 8932, Derwent Publications Ltd., London, GB; AN 89-232336 & JP-A-1 168 714 (YOKOHAMA RUBBER KK) 4. Juli 1989

## Beschreibung

Die Erfindung betrifft Dichtstoffe auf der Basis mercaptoendständiger flüssiger Oligomere. Derartige Dichtstoffe spielen eine große Rolle bei der Abdichtung und Versiegelung von Fugen und der Herstellung von Isolierglaseinheiten, da die ausgehärteten Polysulfidpolymere sehr gute dauerelastische Eigenschaften, gute chemische und witterungsbedingte Beständigkeit sowie niedrige Wasserdampfdurchlässigkeiten zeigen.

Bei bislang eingesetzten derartigen Dichtstoffen erfolgt die Härtung durch Oxidation der Mercaptoendgruppen durch Metalloxide oder Peroxide. Optimale Eigenschaften hinsichtlich der Elastizität wurden durch Härtung mit Mangandioxid erzielt. Leider zeigen derartige Dichtstoffe bei der Verklebung oder Abdichtung von Glas nach UV-Bestrahlung häufig eine Reduzierung der Haftung.

Das Dokument DATABASE WPJ, DERWENT, AN: 68-36889 Q beschreibt Dichtstoffe, die niedermolekulares Polysulfid, eine Vulkanisierpaste, Diphenylguanidin als Härtungskatalysator, Sand und eine kleine Menge Polymethylmethacrylat enthalten. Ähnliche Dichtstoffe betrifft das Dokument DATABASE WPJ, DERWENT, AN: 78-79590 A. Diese enthalten Polysulfidoligomere, hierauf bezogen 3,0 bis 7,5 Gew.% omega-Methacryl-bis-pentacryltrityladipat, als Härtungskatalysator Diphenylguanidin sowie Ruß und als Weichmacher Dibutylphthalat. Schließlich beschreibt das Dokument DATABASE WPJ, DERWENT, AN: 68-18425 Q Dichtstoffe mit 1 bis 10 Gewichtsteilen Acrylsäure oder Methacrylsäure je 100 Gewichtsteile Polysulfidpolymer sowie mit Cumol als Härtungsmittel.

Es ist Aufgabe der Erfindung, schnellhärtende Dichtstoffe bereitzustellen, die die gleichen guten dauerelastischen Eigenschaften und Beständigkeiten zeigen, wie die oxidativ gehärteten Dichtstoffe auf der Basis mercaptoendständiger flüssiger Oligomere, die aber auf Glas auch nach intensiver UV-Bestrahlung insbesondere auch bei gleichzeitiger Wassereinwirkung keine Verminderung der Haftung zeigen.

Die Lösung der Aufgabe erfolgt durch Dichtstoffe gemäß Anspruch 1. Bevorzugte Ausführungsformen derselben sind in den Ansprüchen 2 bis 8 beschrieben. Die Dichtstoffe eignensich besonders zum Verkleben und Abdichten von Glas, insbesondere zur Herstellung von Isolierglasscheiben.

Es wurde gefunden, daß Dichtstoffe auf der Basis flüssiger, mercaptoendständiger Oligomere mit mindesten zwei Mercaptoendgruppen pro Molekül mit Hilfe von Acryl oder Methacrylverbindungen mit mindestens zwei Acryl- oder Methacrylgruppen pro Molekül zu einem elastischen Produkt gehärtet werden können, wenn das Gemisch als Härtungskatalysator ein substituiertes Guanidin enthält.

Die aminkatalysierte Reaktion von mehrfunktionellen merkaptoendständigen und acrylendständigen Verbindungen ist an sich bekannt. Jedoch wurde bei entsprechenden Oligomeren nur ein Gelieren beobachtet. Daher werden gemäß EP-A 0 502 611 diesen Mischungen zur vollen Vernetzung Epoxidharze zugesetzt. Der Zusatz von Epoxidharzen zu flüssigen, mercaptoendständigen Verbindungen führt aber zu unerwünscht harten Massen.

In der US-A 3,736,301 ist beschrieben, merkaptoendständige Polysulfid-Polymere mit Acrylaten und Aminen zu härten. Gleichzeitig aber wird angedeutet, daß der Einsatz eines Co-Härtungsmittel angebracht ist. Derartige Co-Härter sind Oxidationsmittel, die die nicht vernetzten Mercaptoendgruppen miteinander verknüpfen. Lediglich ein analoges Einkomponentensystem bei dem Amin innerhalb mehrerer Tage freigesetzt wird, ergibt eine zufriedenstellende Verbindung der Acryl- mit den Mercaptoendgruppen und damit gute physikalische Eigenschaften der erhaltenen gehärteten Masse. Derartige langsam härtende Einkomponentensysteme sind jedoch für eine technische Fabrikation etwa von Isolierglas, bei der eine schnelle Härtung notwendig ist, nicht einsetzbar.

Eigene Untersuchungen ergaben, daß beim Versetzen von Gemischen aus mercapto- und acrylendständigen Verbindungen mit Aminen bevorzugt die acrylendständigen Verbindungen miteinander reagieren. Daraus resultiert ein Gelieren der Mischung. Da aber ein Teil der mercaptoendständigen Verbindungen nicht gebunden wird, erfolgt keine vollständige Vernetzung, d.h., ein entsprechendes Gemisch härtet nicht durch. Die entstehende Masse ist zwar fest und formstabil, hat aber keine zufriedenstellenden physikalischen Eigenschaften. Bei geringer mechanischer Beanspruchung reißt sie kohäsiv. Die Elastizität ist vernachlässigbar gering.

Wird jedoch als Härtungskatalysator ein substituiertes Guanidin eingesetzt, so erfolgt überraschenderweise eine stöchiometrische Addition der Mercaptogruppen an die Acrylgruppen, d.h., es entsteht eine schnelle, gleichförmige Druchhärtung. Ein Cohärtungsmittel ist nicht notwendig, und es entstehen gummielastische Massen mit guten physikalischen Eigenschaften.

Solche Dichtstoffe sind sog. Zweikomponentendichtstoffe. Die eine Komponente (A) enthält das oder die flüssigen, mercaptoendständigen Oligomere und übliche Weichmacher, Füll- und Zusatzstoffe. Die andere Komponente (B) enthält die mindestens zweifunktionelle Acryl- oder Methacrylverbindung(en), sowie ggf. ebenfalls Weichmacher, Füll- und Zusatzstoffe, insbesondere ein Verzögerungsmittel. Der Härtungskatalysator kann sowohl in der Komponente A als auch in der Komponente B sein.

Kurz vor Gebrauch werden die beiden Komponenten in einem Verhältnis miteinander vermischt, daß pro Mercaptogruppe mindestens eine Acryl- oder Methacrylgruppe vorhanden ist.

Durch die Wahl des Härtungskatalysators, seine Menge und ggf. ein Verzögerungsmittel läßt sich die Härtung so einstellen, daß die pastöse Masse innerhalb von 10 sec. bis zu mehreren Stunden geliert und danach aushärtet, d. h., je nach Beschleunigung hat die Masse eine sehr kurze Verarbeitungszeit, die für eine maschinelle Applikation des Dichtstoffes erwünscht ist, oder eine mehrstündige sog. Topfzeit, die bei der manuellen Verarbeitung gewährleistet sein soll.

Der pastöse, auf Unterlagen aufgebrachte Dichtstoff haftet nach der Aushärtung auf Unterlagen unterschiedlicher Art, wie z. B. Beton, Stein, Metall, Glas und Kunststoffen, insbesondere PVC. Die Haftung wird auch durch längere Wasserlagerung nicht beeinträchtigt. Besonders gut ist die Haftung auf Glas, die auch durch eine lange und intensive UV-Bestrahlung sowie auch durch UV-Bestrahlung bei gleichzeitiger Wasserlagerung nicht vermindert wird.

Die erfindungsgemäßen Dichtstoffe entsprechen in ihrem Grundaufbau den an sich bekannten Rezeptierungen auf Basis flüssiger, mercaptoendständiger Oligomere oder Polymere.

Für die Massen sind alle flüssigen Polymere oder Oligomere oder Mischungen von Oligomeren und polymeren Verbindungen mit mindestens zwei endständigen Mercaptogruppen pro Molekül verwendbar, wie z. B. Polysulfidpolymere oder polymere Thioether.

Die bevorzugten flüssigen mercaptoendständigen Verbindungen sind Polysulfid-Polymere und -Oligomere der allgemeinen Formel HS-(RSS)ₙ-RSH, wobei n im Bereich von 5 bis 50 liegt und R ein Alkyl-, Alkylether oder Alylthioetherrest darstellt.

Der bevorzugte Rest R ist ein Bis-ethylformal-Rest der Formel

-C₂H₄-O-CH₂-O-C₂H₄-

Das Molekulargewicht dieser Verbindungen liegt, abhängig von der Zahl n und der Größe des Restes R im Bereich von 500 bis 8 000, insbesondere von 2 500 bis 4 000. Diese Polysulfid-Verbindungen haben bei Raumtemperatur eine Viskosität von 0,5 bis 80 Pa·s. Sie haben eine mittlere Vernetzung von 0,1 bis 2 %. Sie sind unter der Bezeichnung Thiokol LP® im Handel.

Die flüssigen Oligomere oder Polymere werden in an sich bekannter Weise mit üblichen Füll- und Zusatzstoffen sowie Weichmachern zu plastisch verformbaren Massen angepastet.

Beispiele für Weichmacher sind Phthalate, Benzoesäureester, hydrierte Terphenyle oder hochsiedende Polyäther.

Als anorganische Füllstoffe können alle gebräuchlichen, feinteiligen Füllstoffe eingesetzt werden, insbesondere Ruß, Kreiden, Silikate, Lithopone oder Titandioxid.

Bevorzugt wird eine Mischung verschiedener Füllstoffe in einer Gesamtmenge von 80 bis 150 Gew.-Teilen pro 100 Gew.-Teilen Polysulfid-Oligomer in den Dichtstoff eingesetzt.

Zum Erzielen einer ausreichenden Standfestigkeit enthalten die Dichtstoffe 1 bis 5 Gew.-Teile pro 100 Gew.-Teilen Polysulfid-Oligomer eines Verdichtungs- oder Thixotropiermittels. Beispiele für derartige Stoffe sind hochdisperse Kieselsäure, Bentonite oder hydrierte Rizinusöle.

Hilfsstoffe sind für das jeweilige Härtungssystem notwendige Katalysatoren, Beschleuniger oder Härtungsverzögerer, sowie ggf. Haftmittel, wie z. B. Silane, Emulgierhilfsmittel, Trockenmittel oder Pigmente.

Derartige Hilfsmittel, die bis zu einer Menge von 10 Gew.-Teilen pro 100 Gew.-Teilen Polysulfid-Oligomeren in dem Dichtstoffe enthalten sein können, sind, ebenso wie die Füllstoffe, Weichmacher, Kettenstopper und Thixotropiermittel aus Dichtstofformulierungen für andere Anwendungsgebiete bekannt.

Als Härtungsmittel für die erfindungsgemäßen Dichtstoffe einsetzbar sind Acryl- oder Methacrylsäureester mehrwertiger Alkohole, wie z. B. Glykol- oder Diethylenglykoldiacrylat oder - methacrylat, Trimethylolpropan-di- oder -triarylat oder -methacrylat.

Bevorzugt eingesetzt werden höhermolekulare Acrylate oder Methacrylate, wie z. B. Polyalkylenglykolacrylate oder Di- oder Polyacrylate oder -methacrylate höhermolekularer Polyole.

Insbesondere bevorzugt sind Umsetzungsprodukte von Dioder Polyacrylaten mit mercaptoendständigen Verbindungen insbesondere mit den vorgenannten, flüssigen mercaptoendständigen Polysulfidoligomeren. Derartige Produkte sind aus EP-A 0 502 611 oder aus Polymeric Materials Science Engineering Vol. 67, (1992), Seiten 415 bis 418 bekannt.

Die Menge der Härtungsmittel im Dichtstoff muß so bemessen sein, daß pro Mercaptogruppe mindestens eine Acryl- oder Methacrylgruppe vorhanden ist. Ein geringer Überschuß an Acryl- oder Methacrylgruppen schadet hinsichtlich der Aushärtung nicht. Er führt allenfalls zu einer Reduzierung der gummielastischen Eigenschaften des gehärteten Dichtstoffes.

Als Guanidinderivate sind alle mono-, di-, tri- oder tetrasubstituierten Guanidine einzusetzen und zwar sowohl Alkyl- als auch Acyl- oder Arylguanidine und substituierte Biguanide. Beispiele sind Methyl-, Dimethyl-, Trimethyl-, Tetramethyl-, Ethylol-, Acetyl-, Phenyl-, Diphenyl- oder Triphenylguanidin. Bevorzugt sind Tetramethyl-, Diphenyl- oder Di-o-tolylguanidin sowie o-Tolylbiguanid. Es sind dies handelsübliche Produkte, die als Feststoffe oder mit Weichmachern angepastet eingesetzt werden.

Sie werden zweckmäßig in einer Menge von 0,05 bis 2 Gew.-Teilen auf 10 Gew.-Teile der verwendeten Acryl-, bzw. Methacrylverbindung(en) eingesetzt. Durch Art und Menge des Härtungskatalysators ergeben sich Gelierzeiten im Bereich von weniger als 10 sec. bis zu mehreren Minuten. Dies ist bei maschinellen Verfahren zur Applikation des Dichtstoffes durchaus erwünscht. Bei manueller Applikation sind Verarbeitbarkeitszeiten von mehreren Stunden erwünscht. Diese werden erhalten durch Zugabe eines Verzögerungsmittels.

Als Verzögerungsmittel dienen Carbonsäuren, bevorzugt Fettsäuren, insbesondere Stearin- oder Isostearinsäure, die in einer Menge von 0,1 bis 1 Gew.-Teil auf 10 Gew.-Teilen der eingesetzten Acryl-, bzw. Methacrylverbindungen zugegeben werden.

Härtungskatalysatoren und Verzögerungsmittel können sowohl der Komponente A des Dichtstoffes, bestehend aus flüssigem, mercaptoendständigem Oligomer, Weichmacher, Füll- und Zusatzstoffen, als auch der die Acrylat- oder Methacrylatverbindung(en) und ggf. ebenfalls Weichmacher, Füll- und Zusatzstoffe enthaltenden Komponente B zugegeben werden.

Bevorzugt werden sie in die Härterkomponente B gegeben.

Beide Komponenten sind, getrennt gelagert, mehrere Monate lagerstabil und härten nach dem Vermischen in der eingestellten Härtungszeit von einigen Stunden bis zu einem Tag zu einer gummielastischen Masse aus.

### BEISPIELE

Alle Mengenangaben sind Angaben in Gewichtsteilen
Das eingesetzte Polysulfid-Polymer hat die durchschnittliche Struktur

HS-(C₂H₄-O-CH₂-O-C₂H₄-SS)₂₃-C₂H₄-O-CH₂-O-C₂H₄-SH

mit etwa 2 % Quervernetzung, einem mittleren Molekulargewicht von 4 000 und einer Viskosität bei 27 °C von 35 bis 45 Pa·s Thiokol® LP-2).

Das eingesetzte Acrylat I hat folgende Struktur: 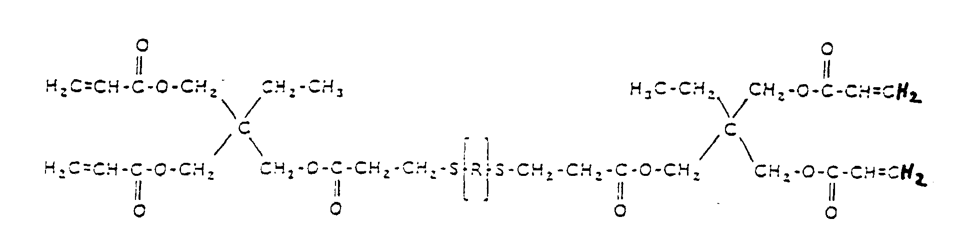 worin R eine aliphatische Kette der durchschnittlichen Struktur

-(C₂H₄-O-CH₂-O-C₂H₄-SS)₈-C₂H₄-O-CH₂-O-C₂H₄-

ist. Das eingesetzte Acrylat II hat folgende Struktur: 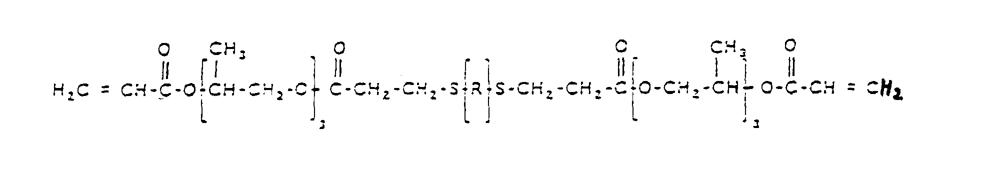 worin R die oben gegebene Bedeutung hat.

### Beispiel 1

### Komponente A

| | |
|---|---|
| 100 | Teile Polysulfid-Polmer werden mit |
| 40 | Teilen Weichmacher (Benzylbutylphthalat) |
| 48 | Teilen Kreide |
| 80 | Teilen calciniertem Kaolin |
| 30 | Teilen Titandioxid |
| 2 | Teilen mercaptoendständigem Silan |

in einem Doppelwellendissolver während 10 Minuten vermischt.

### Komponente B

| | |
|---|---|
| 50 | Teile des Acrylats I werden mit |
| 15 | Teilen RuB |
| 4 | Teilen Weichmacher |
| 0,02 | - 2 Teilen Härtungsbeschleuniger |
| 0 | - 1 Teilen Isostearinsäure |

in einem Doppelwellendissolver während 10 Minuten vermischt.

**Komponenten A und B** werden im Gewichtsverhältnis 200 : 70 miteinander gemischt.

Bei Einsatz der verschiedenen Härtungsbeschleuniger und Verzögerungsmittel ergeben sich folgende Gelierzeiten (GZ)

| Härtungsbeschleuniger | Menge | Isostearinsäure Menge | GZ |
|---|---|---|---|
| --- | --- | --- | 18 h * |
| Tetramethylguanidin | 1 | --- | 10 s |
| Tetramethylguanidin | 0,1 | --- | 20 s |
| Tetramethylguanidin | 0,02 | --- | 40 s |
| Tetramethylguanidin | 0,1 | 0,5 | 2 min |
| Tetramethylguanidin | 0,1 | 1 | 300 min |
| Diorthotolylguanidin | 1 | --- | 15 min |
| Diphenylguanidin | 1 | --- | 20 min |
| Diphenylguanidin | 0,4 | --- | 65 min |
| Diphenylguanidin | 0,4 | 0,5 | 400 min |
| cycloaliphat. Amin | | | |
| (Epikure® 112) | 2 | --- | 40 s * |
| Tris[dimethylamino- | | | |
| methyl]phenol | 2 | --- | 15 min * |
| Triethylentetramin | 2 | --- | 30 s * |

| | | | |
|---|---|---|---|
| * bei diesen Versuchen erfolgt zwar eine Gelierung, aber keine Durchhärtung der Mischung. Die gehärteten Produkte enthalten große Anteile von unvernetztem Polysulfidpolymer. | | | |

### Beispiel 2

**Komponente A aus Beispiel 1**

### Komponente B aus Beispiel 1 (mit 2 Teilen Diorthotolylguanidin als Härtungskatalysator und 0,5 Teilen Isostearinsäure)

werden im Verhältnis 200 : 70 miteinander vermischt und innerhalb der Topfzeit zu 50 x 12 x 12 mm großen Probekörpern zwischen 75 x 24 x 5 mm großen Glasplättchen gespritzt.

Nach 24 h sind die Probekörper durchgehärtet. Sie werden einer UV-Bestrahlung bei gleichzeitiger Wasserlagerung nach (ISO 11431) unterworfen.

Nach 500 h Bestrahlung ist die Haftung noch einwandfrei. Die Probekörper zerreißen beim Dehnversuch kohäsiv bei einer Dehnung um 75 %.

### Beispiel 3

Analog Beispiel 1 werden die Komponenten C und D hergestellt:

### Komponente C

| | |
|---|---|
| 100 | Teile Polysulfid-Polymer |
| 50 | Teile Benzylbutylphthalat |
| 198 | Teile Kreide |
| 2 | Teile Orthotolybiguanid ( 50 % in Weichmacher) |

### Komponente D

| | |
|---|---|
| 10 | Teile Acrylat I |
| 72 | Teile Acrylat II |
| 2 | Teile Ruß |
| 85 | Teile Kreide |

Komponenten C und D werden im Gewichtsverhältnis 100:48 miteinander vermischt und bei Raumtemperatur gehärtet.

| | | |
|---|---|---|
| Verarbeitbarkeitszeit: | | 90 min |
| Härtungszeit: | | < 18 h |
| Shore A-Härte | nach 1 d: | 17 |
| | nach 2 d: | 18 |
| | nach 3 d: | 20 |
| | nach 10 d: | 20 |

Mit der Masse wurden Probekörper analog Beispiel 4 hergestellt und nach der Aushärtung geprüft:

| | |
|---|---|
| Elastizitätmodul bei 100 % Dehnung: | 0,27 MPa |
| max. Modul: | 0,37 MPa |
| max. Dehnbarkeit: | 250 % |

Nach 500 h UV-Bestrahlung bei gleichzeitiger Wasserlagerung ist die Haftung noch einwandfrei.

## Patentansprüche

1. Dichtstoff, enthaltend mercaptoendständige flüssige Oligomere mit mindestens zwei Mercaptogruppen pro Molekül, Acryl- oder Methacrylverbindungen mit wenigstens zwei Acryl- oder Methacrylgruppen pro Molekül, ein Guanidinderivat als Härtungskatalysator, Weichmacher und übliche Füll- und Zusatzstoffe, **dadurch gekennzeichnet**, daß er die Acryl- oder Methacrylverbindungen als einzige Härtungsmittel und in solcher Menge enthält, daß das stöchiometrische Verhältnis von Mercapto- zu Acryl- bzw. Methacrylgruppen im Bereich von 1 : 1 bis 1 : 1,5 liegt.

2. Dichtstoff nach Anspruch 1, **dadurch gekennzeichnet**, daß er als Acryl- oder Methacrylverbindungen ein Umsetzungsprodukt eines flüssigen mercaptoendständigen Oligomers mit einem Di- oder Polyacrylat oder -methacrylat enthält.

3. Dichtstoff nach Anspruch 1 oder 2, **dadurch gekennzeichnet**, daß er als Guanidinderivat Tetramethyl-, Diphenyl-, Di-o-tolylguanidin oder o-Tolylbiguanid enthält.

4. Dichtstoff nach einem der Ansprüche 1 bis 3, **dadurch gekennzeichnet**, daß er das Guanidinderivat in einer Menge von 0,05 bis 2 Gewichtsteile je 10 Gewichtsteile der Acryl--oder Methacrylverbindungen enthält.

5. Dichtstoff nach einem der Ansprüche 1 bis 4, **dadurch gekennzeichnet**, daß er zusätzlich als Verzögerungsmittel eine Carbonsäure enthält.

6. Dichtstoff nach Anspruch 5, **dadurch gekennzeichnet**, daß er die Carbonsäure in einer Menge von 0,1 bis 1 Gewichtsteil je 10 Gewichtsteile der Acryl- oder Methacrylverbindungen enthält.

7. Dichtstoff nach Anspruch 5 oder 6, **dadurch gekennzeichnet**, daß er als Carbonsäure Stearin- oder Isostearinsäure enthält.

8. Dichtstoff nach einem der Ansprüche 1 bis 7, **dadurch gekennzeichnet**, daß er aus einer Komponente A, die das mercaptoendständige flüssige Oligomere, den Weichmacher, die Füll- und Zusatzstoffe enthält, und einer Komponente B, die die Acryl- oder Methacrylverbindungen, den Härtungskatalysator und gegebenenfalls Weichmacher, Füllstoffe und Verzögerungsmittel enthält, besteht.

9. Verwendung eines Dichtstoffes nach einem der Ansprüche 1 bis 8 zum Verkleben und Abdichten von Glas, insbesondere zur Herstellung von Isolierglasscheiben.

## Claims

1. Sealant containing liquid mercapto-terminated oligomers having at least two mercapto groups per molecule, acrylic or methacrylic compounds having at least two acrylic or methacrylic groups per molecule, a guanidine derivative as curing catalyst, plasticizer and usual fillers or additives, **characterized in** that it contains the acrylic or methacrylic compounds as sole curing agents and in such an amount that the stoichiometric ratio of mercapto groups to acrylic or methacrylic groups is within the range of from 1 : 1 to 1 : 1.5.

2. Sealant according to claim 1, **characterized in** that it contains as acrylic or methacrylic compounds a reaction product of a liquid mercapto-terminated oligomer with a di- or polyacrylate or methacrylate.

3. Sealant according to claim 1 or 2, **characterized in** that it contains as guanidine derivative tetramethyl, diphenyl, di-o-tolyl guanidine or o-tolylbiguanide.

4. Sealant according to one of the claims 1 to 3, **characterized in** that it contains the guanidine derivative in an amount of from 0.05 to 2 parts by weight per 10 parts by weight of the acrylic or methacrylic compounds.

5. Sealant according to one of the claims 1 to 4, **characterized in** that it contains additionally a carboxylic acid as retarder.

6. Sealant according to claim 5, **characterized in** that it contains the carboxylic acid in an amount of from 0.1 to 1 part by weight per 10 parts by weight of the acrylic or methacrylic compounds.

7. Sealant according to claim 5 or 6, **characterized in** that it contains stearic or isostearic acid as carboxylic acid.

8. Sealant according to one of-the claims 1 to 7, **characterized in** that it consists of a component A containing the liquid mercapto-terminated oligomer, the plasticizer, the fillers and additives, and a component B containing the acrylic or methacrylic compounds, the curing catalyst and optionally plasticizer, fillers and/or retarder.

9. Use of a sealant according to one of the claims 1 to 8 to bond and seal glass, especially for the production of insulating panes of glass.

## Revendications

1. Masse d'étanchéité contenant des oligomères liquides comportant des groupes mercapto en position finale avec au moins deux groupes mercapto par molécule, des composés acryliques ou méthacryliques avec au moins deux groupes acryliques ou méthacryliques par molécule, un dérivé de guanidine comme catalyseur de durcissement, des plastifiants et des charges et additifs habituels, caractérisée en ce qu'elle contient les composés acryliques ou méthacryliques comme agents de durcissement uniques et en une quantité telle que le rapport stoechiométrique des groupes mercapto aux groupes acryliques ou, selon les cas, méthacryliques, se situe dans un intervalle de 1 : 1 à 1 : 1,5.

2. Masse d'étanchéité selon la revendication 1, caractérisée en ce qu'elle contient comme composés acryliques ou méthacryliques un produit de réaction d'un oligomère liquide avec un mercapto en position finale avec un di- ou poly-acrylate ou -méthacrylate.

3. Masse d'étanchéité selon la revendication 1 ou 2, caractérisée en ce qu'elle contient comme dérivé de guanidine la tétraméthyl-, diphényl-, di-o-tolylguanidine ou le o-tolylbiguanide.

4. Masse d'étanchéité selon l'une des revendications 1 à 3, caractérisée en ce qu'elle contient le dérivé de guanidine en une quantité de 0,05 à 2 parties en poids pour 10 parties en poids des composés acryliques ou méthacryliques.

5. Masse d'étanchéité selon l'une des revendications 1 à 4, caractérisée en ce qu'elle contient en outre comme agent de retardement un acide carboxylique.

6. Masse d'étanchéité selon la revendication 5, caractérisée en ce qu'elle contient l'acide carboxylique en une quantité de 0,1 à 1 partie en poids pour 10 parties en poids des composés acryliques ou méthacryliques.

7. Masse d'étanchéité selon la revendication 5 ou 6, caractérisée en ce qu'elle contient comme acide carboxylique l'acide stéarique ou l'acide isostéarique.

8. Masse d'étanchéité selon l'une des revendications 1 à 7, caractérisée en ce qu'elle est constituée d'un composant A, qui contient l'oligomère liquide à mercapto en position finale, le plastifiant, les charges et les additifs, et d'un composant B, qui contient les composés acryliques ou méthacryliques, le catalyseur de durcissement et, le cas échéant, des plastifiants, des charges et des agents de retardement.

9. Utilisation d'une masse d'étanchéité selon l'une des revendications 1 à 8 pour coller et étanchéifier du verre, en particulier pour fabriquer des vitres en verre isolant.
